# EUROPÄISCHE PATENTANMELDUNG

(11) **EP 0 656 387 A1**
(43) Veröffentlichungstag der Anmeldung: **07.06.1995**
(21) Anmeldenummer: 94119004.3
(22) Anmeldetag: 01.12.1994
(51) Int. Cl.: C08J 5/12, C08J 5/06

(54) **Verfahren zur Herstellung von Verbunden zwischen Polyamid und vulkanisationsfähigen Kautschuk-Mischungen**

(30) Priorität: 02.12.1993 DE 4341031
(71) Anmelder: PNEUMANT REIFEN & GUMMI WERKE GmbH, D-15517 Fürstenwalde (DE)
(72) Erfinder: Krause, Dieter, D-01591 Riesa (DE)
(74) Vertreter: Thiermann, Jürgen

(57) **Zusammenfassung**

Verfahren zur Herstellung von Verbunden zwischen Polyamid und vulkanisationsfähigen Kautschukmischungen.

Die Herstellung von festen und dauerhaften Verbindungen zwischen Festigkeitsträgern aus Polyamid mit im wesentlichen ebenen Oberflächen und vulkanisationsfähigen Kautschukmischungen, beispielsweise für Fahrzeugreifen, soll mit umweltund gesundheitsverträglichen Verfahren gewährleistet werden. Gleichzeitig soll die Resistenz der aufgetragenen RFL-Haftvermittler gegenüber Reaktion mit der Luftfeuchtigkeit verbessert werden.

Erreicht wird dies durch ein Verfahren zur Herstellung von solchen Verbunden unter Verwendung eines Haftvermittlers aus einer wäßrigen Dispersion eines Resorcin-Formaldehyd-Latex-Gemisches, der eine wäßrige Lösung einer teilweise oder vollverseiften niedrigviskosen hochpolymeren Verbindung zugesetzt ist.

Das neue Verfahren ist in der Gummi verarbeitenden Industrie, insbesondere bei der Produktion von Fahrzeugreifen oder anderen Vulkanisationsprodukten mit Festigkeitsträgern aus Polyamid, vorteilhaft anwendbar.

## Beschreibung

Die Erfindung betrifft ein Verfahren zur Herstellung von Verbunden zwischen Polyamid und vulkanisationsfähigen Kautschukmischungen. Sie ist insbesondere für die feste Einbindung von flächenhaften Polyamid-Festigkeitsträgern geeignet, die in Fahrzeugreifen, aber auch anderen, mit Polyamid verstärkten Vulkanisationsprodukten, eingebettet werden.

Die Verbindung von Polyamid mit vulkanisationsfähigen Kautschukmischungen ist durch deren geringe chemische Bindungsneigung und der hohen Oberflächenspannung des Polyamid nur unter Anwendung von Haftvermittlern so zu gestalten, daß diese fest und dauerhaft den thermischen und mechanischen Anforderungen genügt.
Insbesondere bei der Herstellung von Fahrzeugreifen, bei denen Verstärkungselemente im Gürtel oder in der Wulst durch Polyamid-Einlagen gebildet werden, müssen auf Grund der beim Einsatz der Reifen auftretenden hohen thermischen und mechanischen Belastungen große Bindungskräfte zwischen den Paarungspartnern gewährleistet werden.

Es ist bekannt, zur Haftvermittlung zwischen derartigen Paarungspartnern Chemikalien auf der Grundlage von Chemosilen, Isocyanaten, Epoxidharzen sowie Kombination derselben einzusetzen (DE-PS 895 526, DE-PS 900 270, DE-PS 898 809, FR-PS 1 340 352, FR-PS 2 215 455, US-PS 3 215 455, SU-EB 827 498). Diese Haftvermittler enthalten gesundheits- und umweltschädigende Lösungsmittel. Sie sind deshalb in der Anwendung besonders problembehaftet. Bekannte wäßrige Haftvermittler auf der Basis von Resorcin-Formaldehyd-Latex werden bei der Herstellung von Garnen und Korden aus Polyamidmonofilen zu einer Erhöhung der Gummifreundlichkeit genutzt (DE-OS 2 039 692). Sie haben aber eine hohe Oberflächenspannung, die zu einer ungenügenden Benetzung der Polyamidoberfläche und damit zu einer begrenzten Haftung zwischen den Paarungspartnern führt. Nur wenn Polyamidmonofilen verwendet werden, reicht auf Grund der völligen Umschließung die Haftung zwischen den Paarungspartnern auch bei nicht vollständiger Benetzung der Polyamidoberfläche aus. Werden Polyamidfolien oder -bänder mit weitestgehend ebenen Oberflächen als Paarungspartner verwendet, reicht die Benetzungsfähigkeit von wäßrigen Dispersionen nicht aus, um einen ganzflächigen Film auf der Polyamidoberfläche zu bilden, und es sind mit diesen Haftvermittlern keine den Anforderungen genügende Bindungen zu erreichen.

Es ist weiterhin bekannt, derartigen wäßrigen Dispersionen auf der Basis von Resorcin-Formaldehyd-Latex zur Verbesserung der Haftung bzw. Erhöhung der Temperaturbeständigkeit des Verbundes mit chemisch aktiven Substanzen, wie Epoxidharzen, einfachen oder geblockten Isocyanaten sowie anderen Chemikalien zu versetzen (DE-OS 2 039 692, DE-OS 3 805 086).

Die Anwendung dieser Stoffe im technologischen Prozeß ist jedoch wegen ihrer Toxizität nicht erwünscht. Auch wird die Stabilität der Dispersion und die Lagerfähigkeit stark beeinträchtigt, weil bereits kurz nach der Zugabe dieser Substanzen ein Verdicken bzw. Gelieren einsetzt.

Es sind auch oberflächenaktive Substanzen als Netzmittel bekannt, so z.B. Tenside, die der wäßrigen Dispersion aus Resorcin-Formaldehyd-Latex zugesetzt werden, um eine gleichmäßige Verteilung auf der Polyamidoberfläche zu gewährleisten. Diese Stoffe sind aber erst in höheren Konzentrationen aktiv, in denen sie dann bereits wieder als Trennmittel zwischen Polyamid und den Kautschukmischungen wirksam sind.

Ein weiterer Nachteil tritt bei den bekannten Verfahren zur Herstellung von Verbunden zwischen Polyamid und vulkanisationsfähigen Kautschukmischungen auf der Basis von Resorcin-Formaldehyd-Latex dadurch auf, daß der als Schicht auf dem Polyamid aufgebrachte und durch eine Wärmebehandlung aktivierte Haftvermittler bei einer technologiebedingten Lagerung mit der Luftfeuchtigkeit reagiert und somit seine haftvermittelnde Eigenschaft beeinträchtigt wird. Es ist deshalb erforderlich, das beschichtete Polyamid zur Reduzierung dieses Effekts vor der Weiterbearbeitung bei Temperaturen von mindestens 130°C zu trocknen.

Der Erfindung liegt die Aufgabe zugrunde, ein umweltfreundliches und nicht oder nur in geringem Maße gesundheitsschädliches Verfahren zur Herstellung von Verbunden zwischen Polyamid und vulkanisationsfähigen Kautschukmischungen zu schaffen, mit dem es auch möglich ist, die Haftvermittlung zu flächigen Polyamid-Festigkeitsträgern herzustellen, wie sie insbesondere bei der Herstellung von Fahrzeugreifen oder anderen Vulkanisationsprodukten benötigt wird.
Eine weitere Aufgabe der Erfindung besteht darin, die Lagerfähigkeit der beschichteten Festigkeitsträger zu verbessern.

Diese Aufgaben werden durch ein Verfahren gelöst, bei dem auf den Polyamid-Festigkeitsträger vor dem Belegen mit den vulkanisationsfähigen Kautschukmischungen auf diesen in einer Dicke von 0,2 bis 2,5 mm ein Haftvermittler aufgetragen, danach getrocknet und bei einer Temperatur zwischen 140 und 200°C aktiviert und fixiert und letztendlich vulkanisiert wird, wobei als Haftvermittler eine wäßrige Dispersion eines Gemisches aus Resorcin-Formaldehyd-Latex, mit einem Harzanteil von 4 bis 10 Gewichtsteilen, einem Molverhältnis Resorcin / Formaldehyd von 1:0,8 bis 1:2,5 und einem Latexanteil von 20 bis 60 Gewichtsteilen, bezogen den Festkörperanteil, verwendet wird, der eine wäßrige Lösung einer teilweise oder vollverseiften niedrigviskosen hochpolymeren Verbindung zugesetzt ist, wobei die hochpolymeren Verbindung 1 bis 10 Festkörper-Gewichtsanteile, bezogen auf 100 Resorcin-Formaldehyd-Latex Gewichtsanteile, enthält.

Vorteilhafte Ausgestaltungen des erfindungsgemäßen Verfahrens ergeben sich durch die Verwendung von Polyvinylalkohol oder Polyvinylacetat als hochpolymere Verbindung.

Mit dem erfindungsgemäßen Verfahren wird eine völlige Benetzung der Polyamidoberfläche mit dem Haftvermittler erreicht, wodurch eine innige Verbindung der Paarungspartner gewährleistet werden kann. Zugleich erhält die getrocknete und aktivierte Schicht des Haftvermittlers eine hohe wasserabweisende Eigenschaft. Die Empfindlichkeit des beschichteten Festigkeitsträgers gegenüber Luftfeuchtigkeit wird gleichzeitig wesentlich reduziert. Zusätzliche Maßnahmen, wie eine Trocknung der beschichteten Festigkeitsträger vor dem Belegen mit einer Kautschukmischung, kann entfallen. Die mit dem erfindungsgemäßen Verfahren beschichteten Polyamid-Festigkeitsträger weisen im Verbund mit den vulkanisierten Kautschukmischungen eine außerordentlich hohe Festigkeit auf. Auch bei den für Fahrzeugreifen typischen bis extremen thermischen und mechanischen Belastungen tritt keine Zerstörung des Verbundes auf.

Die Erfindung soll nachfolgend an zwei Ausführungsbeispielen näher erläutert werden:

Für das erfindungsgemäße Verfahren wird in einem ersten Beispiel als Haftvermittler eine wäßrigen Lösung eines Resorcin-Formaldehyd-Latex-Gemisch verwendet, die bezogen auf Gewichtsteile aus:
820 Teilen enthärtetem Wasser
39 Teilen Resorcin
1 Teil Natriumhydroxid
80 Teilen Formaldehyd (30%ig)
50 Teilen Ammoniak (35%ig)
400 Teilen Latex sowie einem Zusatz von
110 Teilen einer 10%igen Lösung eines vollverseiften Polyvinylalkohols zusammengesetzt ist. Der Wasserzusatz ist entsprechend den Verarbeitungsbedingungen so eingestellt, daß der Festkörperanteil zwischen 12 und 16% liegt.

In einem zweiten Beispiel wird als Haftvermittler eine wäßrige Lösung eines Resorcin-Formaldehyd-Latex-Gemisches verwendet, die bezogen auf Gewichtsteile aus:
1 000 Teilen enthärtetes Wasser
39 Teilen Resorcin
1 Teil Natriumhydroxid
80 Teilen Formaldehyd (30%ig)
50 Teilen Ammoniak (35%ig)
400 Teilen Latex sowie einem Zusatz von
110 Teilen einer 10%igen wäßrigen Lösung eines niedrigviskosen teilverseiften Polyvinylacetats zusammengesetzt ist. Auch hier ist der Wasseranteil so eingestellt, daß der Festkörperanteil zwischen 12 und 16% liegt. Die beispielhaft aufgeführten Haftvermittler werden auf eine Polyamidfolie einer Dicke von ca. 0,5 mm aufgetragen, nachfolgend getrocknet und bei einer Temperatur von etwa 150°C aktiviert und fixiert.

Die Lagerung der beschichteten Polyamid-Festigkeitsträger ist unkompliziert, da der Haftvermittler eine hohe Hydrophopie aufweist und deshalb nahezu keine Reaktion zwischen dem in ihm enthaltenen Latex und der Luftfeuchtigkeit erfolgen kann.

Die so vorbehandelten Festigkeitsträger werden mit der vulkanisationsfähigen Kautschukmischung belegt, die in beiden Ausführungsbeispielen aus einer Mischung von vorwiegend Naturkautschuk im Verschnitt mit Synthesekautschuk auf der Basis von Styrol-Butadin-Copolymeren, Rußen und üblichen Mischungsingredentien und Chemikalien besteht. Nach dem Vulkanisieren der konfektionierten Verbunde, die unter den üblichen Vulkanisationsbedingungen oder isotherm bei 180°C und 15 Minuten erfolgt, sind die aus Polyamid bestehenden Festigkeitsträger auf ihrer ganzen Oberfläche eine innige Verbindung mit dem sie umgebenden Kautschuk eingegangen und widerstehen über eine lange Zeit, z. B. die Lebensdauer eines Fahrzeugreifens, hohen thermischen und mechanischen Belastungen.

Die Anwendung ist nicht auf die in den Ausführungsbeispielen beschriebenen Zusammensetzungen und Anwendungsfälle begrenzt.

## Patentansprüche

1. Verfahren zur Herstellung von Verbunden zwischen Polyamid und vulkanisationsfähigen Kautschukmischungen, insbesondere für die feste Einbindung von aus Polyamid bestehenden, weitestgehend ebene Oberflächen aufweisenden Festigkeitsträgern in Fahrzeugreifen oder anderen Vulkanisationsprodukten, unter Verwendung eines Haftvermittlers, welcher vor dem Belegen der Festigkeitsträger mit der vulkanisationsfähigen Kautschukmischung in einer Dicke von 0,2 bis 2,5 mm auf die Festigkeitsträger aufgebracht und danach getrocknet und bei einer Temperatur zwischen 140 und 200°C aktiviert und fixiert und letztendlich vulkanisiert wird, dadurch gekennzeichnet, daß als Haftvermittler eine wäßrige Dispersion eines Gemisches aus Resorcin-Formaldehyd-Latex, mit einem Harzanteil von 4 bis 10 Gewichtsteilen, einem Molverhältnis Resorcin / Formaldehyd von 1:0,8 bis 1:2,5 und einem Latexanteil von 20 bis 60 Gewichtsteilen, bezogen den Festkörperanteil, verwendet wird, der eine wäßrige Lösung einer teilweise oder vollverseiften niedrigviskosen hochpolymeren Verbindung zugesetzt ist, wobei die hochpolymeren Verbindung 1 bis 10 Festkörper-Gewichtsanteile, bezogen auf 100 Resorcin-Formaldehyd-Latex Gewichtsanteile, enthält.

2. Verfahren nach Anspruch 1, dadurch gekennzeichnet, daß als hochpolymere Verbindung ein Polyvinylalkohol verwendet wird.

3. Verfahren nach Anspruch 1, dadurch gekennzeichnet, daß als hochpolymere Verbindung ein Polyvinylacetat verwendet wird.
